# EUROPÄISCHE PATENTANMELDUNG

(11) **EP 4 292 688 A1**
(43) Veröffentlichungstag der Anmeldung: **20.12.2023**
(21) Anmeldenummer: 22178979.5
(22) Anmeldetag: 14.06.2022
(51) Int. Cl.: B01D 45/06, B01D 45/12, B01D 47/02, B01D 50/40

(54) **HYDROZYKLON ZUM ABSCHEIDEN VON FESTSTOFFEN UND/ODER FLÜSSIGKEITEN AUS EINEM GASFÖRMIGEN PROZESSSTROM**

(71) Anmelder: ESTA Apparatebau GmbH & Co. KG, 89250 Senden (DE)
(72) Erfinder: Novosel, Michael, 89564 Nattheim (DE); Herrmann, Maik, 89275 Elchingen (DE); Hahn, Johann Paul, 89165 Dietenheim (DE)
(74) Vertreter: Michalski Hüttermann & Partner Patentanwälte mbB

(57) **Zusammenfassung**

Die vorliegende Erfindung betrifft einen Hydrozyklon (1) zum Abscheiden von Feststoffen und/oder Flüssigkeiten aus einem gasförmigen Prozessstrom (26), aufweisend einen durch eine Umfangswandung (2) gebildeten, in einem ersten Prozessraumabschnitt (3.1) zylindrisch ausgebildeten Prozessraum (3), wobei eine axiale Richtung (A) des Prozessraums (3) sich vertikal erstreckt und ein unterer Bereich (7) des Prozessraums (3) zum Befüllen mit einer Prozessflüssigkeit (27) bis zu einem Füllstand (25) vorgesehen ist, einen die Umfangswandung (2) in dem unteren Bereich (7) des Prozessraums (3) durchbrechenden Einlassstutzen (8) zum Einlassen des Prozessstroms (26) in Umfangsrichtung des Prozessraums (3), einen an einem oberen Ende (5.2) des Prozessraums (3) angeordneten Auslass (6) zu Herausführen des Prozessstroms (26), und ein sich koaxial zu der Umfangswandung (2) in dem Prozessraum (3) erstreckendes Leitmittel (10) zum Führen des Prozessstroms (26) in einer Helixform zwischen dem Einlassstutzen (8) und dem Auslass (6). Die Erfindung betrifft weiterhin eine Hydrozyklonanordnung (15) mit einem Hydrozyklon (1).

## Beschreibung

### Technisches Gebiet

Die vorliegende Erfindung betrifft einen Hydrozyklon zum Abscheiden von Feststoffen und/oder Flüssigkeiten aus einem gasförmigen Prozessstrom. Die vorliegende Erfindung betrifft weiterhin eine Hydrozyklonanordnung mit einem solchen Hydrozyklon und mit einer Prozessflüssigkeitswanne.

### Hintergrund der Erfindung

Bei Hydrozyklonen, die grundsätzlich aus dem Stand der Technik bekannt sind, wird ein gasförmiger Prozessstrom entlang einer helixförmigen Trajektorie geführt, um in dem Gasstrom enthaltene Feststoffpartikeln und/oder Flüssigkeitströpfchen nach radial außen zu tragen. Dabei wird in den Prozessstrom oder in bestimmten Bereichen des Hydrozyklons eine Prozessflüssigkeit eingebracht, um die Feststoffpartikeln und/oder Flüssigkeitströpfchen zum leichteren Abscheiden zu binden und/oder für eine bessere Abscheidung zu agglomerieren. Beispielsweise ist es bekannt, dass die Prozessflüssigkeit durch den Prozessstrom aufgewirbelt wird oder bei einem als Zyklonwäscher ausgebildeten Hydrozyklon eingesprüht wird.

Nachteilig unterliegt der Prozessstrom bei bekannten Hydrozyklonen einem hohen Druckverlust. Zudem kann nur über eine sehr schmale Bandbreite von Volumenströmen ein gewünschter Abscheidegrad erreicht werden. Verändert sich der Volumenstrom des Prozessstroms oder schwankt, können Feststoffpartikeln und/oder Flüssigkeitströpfchen den Hydrozyklon passieren. Weiterhin besteht das Problem, dass Prozessflüssigkeit mit dem Prozessstrom aus dem Hydrozyklon ausgetragen wird und potentiell nachgeschaltete Anlagenkomponenten, wie etwa weitere Filterstufen, beschädigt. Letztlich neigen bekannte Hydrozyklon je nach Art des Prozessstroms zu Verunreinigungen, die negativen Einfluss auf den Abscheidegrad und den Druckverlust nehmen, und eine aufwändige Reinigung nötig machen. Dieses Problem besteht beispielsweise beim Abscheiden von Aluminium-Schleifabrieb aus Prozessluft, da die Aluminiumpartikeln bzw. Agglomerate daraus an Wandungen des Hydrozyklons anhaften.

### Beschreibung der Erfindung

Ausgehend von dieser Situation ist es eine Aufgabe der vorliegenden Erfindung, einen Hydrozyklon vorzuschlagen, bei dem zumindest eines der vorgenannten Probleme nicht besteht. Insbesondere ist es eine Aufgabe der vorliegenden Erfindung, einen Hydrozyklon mit geringem Druckverlust und einen hohen Abscheidegrad vorzuschlagen.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Nach einem ersten Aspekt der Erfindung wird die Aufgabe gelöst durch einen Hydrozyklon zum Abscheiden von Feststoffen und/oder Flüssigkeiten aus einem gasförmigen Prozessstrom, einen durch eine Umfangswandung gebildeten, in einem ersten Prozessraumabschnitt zylindrisch ausgebildeten Prozessraum, wobei eine axiale Richtung des Prozessraums sich vertikal erstreckt und ein unterer Bereich des Prozessraums zum Befüllen mit einer Prozessflüssigkeit bis zu einem Füllstand vorgesehen ist, einen die Umfangswandung in dem unteren Bereich des Prozessraums durchbrechenden Einlassstutzen zum Einlassen des Prozessstroms in Umfangsrichtung des Prozessraums, einen an einem oberen Ende des Prozessraums angeordneten Auslass zu Herausführen des Prozessstroms, und ein sich koaxial zu der Umfangswandung in dem Prozessraum erstreckendes Leitmittel zum Führen des Prozessstroms in einer Helixform zwischen dem Einlassstutzen und dem Auslass.

Als Hydrozyklon wird eine Vorrichtung verstanden, in der durch das Führen eines hauptsächlich gasförmigen Prozessstroms entlang einer helixförmigen Trajektorie eine Trennkraft auf in dem Prozessstrom enthaltene Feststoffe und/oder Flüssigkeiten erzeugt wird und ein Abscheiden der Feststoffe oder Flüssigkeiten erfolgt. Das Abscheiden erfolgt dabei durch radiales Austragen des Feststoffs und/oder der Flüssigkeit. Dabei werden der Feststoff und/oder die Flüssigkeit in Kontakt mit einer Prozessflüssigkeit wie beispielsweise Wasser gebracht, um Feststoffpartikeln und/oder Flüssigkeitströpfchen zu binden und/oder für eine bessere Abscheidung durch Fliehkräfte zu agglomerieren. Unter einer Helixform wird auch und insbesondere eine Helixform mit einem sich zumindest bereichsweise verjüngenden Außendurchmesser verstanden.

In einem Hydrozyklon können beispielsweise Stäube, Späne und/oder Abrieb sowie Schmiermittel- oder Kühlmitteltröpfchen, beispielsweise von einem mechanischen Bearbeitungsprozess, aus einem gasförmigen Prozessstrom wie etwa einem Luft- oder Schutzgasstrom abgetrennt werden. Insbesondere wird der Hydrozyklon auch bei brennbaren oder explosionsgefährdeten Feststoffen und/oder Flüssigkeiten in dem Prozessstrom verwendet, um eine Brand- oder Explosionsgefahr gegenüber einem Abscheider ohne Prozessflüssigkeit zu verringern.

Als Prozessstrom wird das an einem jeweiligen Punkt des Hydrozyklons befindliche strömende Fluid bezeichnet, unabhängig davon, ob an diesem Punkt nur das Gas selber oder auch Feststoffe und/oder Flüssigkeiten, insbesondere Prozessflüssigkeit in dem Prozessstrom enthalten sind. Die jeweilige Zusammensetzung des Prozessstroms ergibt sich entlang dessen Trajektorie in dem Hydrozyklon jeweils aus dem Kontext. Insofern der Prozessstrom als gasförmig bezeichnet wird, bezieht sich das auf einen gänzlich gereinigten Prozessstrom und ist nicht einschränkend bezüglich einer Beladung mit Feststoffen und/oder Flüssigkeiten, insbesondere der Prozessflüssigkeit zu verstehen.

Als Umfangswandung wird eine Wandung verstanden, die eine geometrischen Umhüllung einer solchen Helixform bildet. Die Umfangswandung ist in dem ersten Prozessraumabschnitt zylinderförmig ausgebildet, weist also einen runden Querschnitt auf und definiert ein zylindrisches Koordinatensystem mit einer axialen Richtung, einer radialen Richtung und einer Umfangsrichtung. Insgesamt ist der Hydrozyklon in seinen wesentlichen Komponenten um dieses zylindrische Koordinatensystem koaxial aufgebaut.

Insofern ein Einlassstutzen in dem unteren Bereich des Prozessraums angeordnet ist, weist dieser keinen oder verglichen mit der gesamten axialen Erstreckung des ersten Prozessraumabschnitts nur einen geringen Abstand zu einem unteren Ende des ersten Prozessraumabschnitts auf. Insbesondere liegt ein vorgesehener Füllstand der Prozessflüssigkeit innerhalb der axialen Erstreckung des Einlassstutzens, sodass in den ersten Prozessraumabschnitt eingefüllte Prozessflüssigkeit auch im Einlassstutzen steht. Eine Prozessstromzuführung zu dem Einlassstutzen erfolgt dann bevorzugt von oben, sodass keine Prozessflüssigkeit zu dem Hydrozyklon vorgelagerten Komponenten einer Anlage gelangen kann. Weiterhin weist ein vorgesehener Füllstand bevorzugt zu der axialen Länge des ersten Prozessraumabschnitts ein Verhältnis zwischen 0,3 und 0,6, bevorzugt zwischen 0,4 und 0,5 und insbesondere von 0,45 auf.

Der erste Erfindungsaspekt umfasst die Lehre, dass der in den Prozessraum eintretende Prozessstrom in dem unteren Bereich des Prozessraums eingefüllte Prozessflüssigkeit aufwirbelt, sodass die Prozessflüssigkeit einen im Wesentlichen radial außen in dem Prozessraum angeordneten Prozessflüssigkeitsschleier bildet. Insbesondere bildet die Prozessflüssigkeit einen im Querschnitt parabelförmigen Schleier mit einer koaxial zur axialen Richtung angeordneten Mittelachse aus. In dem Prozessstrom enthaltene Feststoffpartikeln und/oder Flüssigkeitstropfen werden dann in der helixförmigen Trajektorie, die der Prozessstrom in dem Prozessraum einnimmt, nach radial außen getragen und gelangen spätestens dort in Kontakt mit dem Prozessflüssigkeitsschleier, sodass Feststoffpartikeln und/oder Flüssigkeitstropfen in der Prozessflüssigkeit gebunden und/oder für eine bessere Abscheidung durch Fliehkräfte agglomeriert werden.

Durch das Vorsehen eines Leitmittels wird erreicht, dass der Prozessstrom in seiner Helixform geführt wird, sodass Turbulenzen und somit ein Strömungswiderstand über die helixförmige Trajektorie des Prozessstroms reduziert werden bzw. wird. Dadurch wird erreicht, dass der Hydrozyklon insgesamt einen verringerten Druckverlust gegenüber einem Hydrozyklon ohne ein Leitmittel aufweist. Das Leitmittel erstreckt sich dabei bis in den unteren Bereich des Prozessraums hinein und taucht in in dem Prozessraum eingefüllte Prozessflüssigkeit ein. Bevorzugt erstreckt sich das Leitmittel axial bis zu einem unteren Ende des ersten Prozessraumabschnitts. Andererseits erstreckt sich das Leitmittel bevorzugt axial bis zu einem oberen Ende des Prozessraums. Der Querschnitt des ersten Prozessraumabschnitts wird insofern dort, wo sich das Leitmittel erstreckt, von einer kreisrunden Form zu einer Kreisringform eingeschränkt und somit auf den Bereich eingeschränkt und verkleinert, der tatsächlich von der helixförmigen Trajektorie eingenommen wird. Durch das Eintauchen des Leitmittels in der Prozessflüssigkeit ist weiterhin auch die Oberfläche der Prozessflüssigkeit von einer kreisrunden Form auf eine Kreisringform beschränkt. Auf diese Weise wird auch durch das Aufwirbeln der Prozessflüssigkeit zum Ausbilden des Prozessflüssigkeitsschleier ein verringerter Druckverlust erreicht, indem die Turbulenzen an der Prozessflüssigkeit gegenüber einem Hydrozyklon ohne Leitmittel verringert werden. Auch ist die notwendige Menge Prozessflüssigkeit, die in den Hydrozyklon eingefüllt werden muss, verringert.

Durch das Leitmittel wird weiterhin überraschend ein deutlich erhöhter Abscheidegrad erreicht, wobei ein erhöhter Abscheidegrad auch über eine vergrößerte Bandbreite an Volumenströmen erreicht wird. Der Hydrozyklon behält demnach auch bei Veränderungen oder Schwankungen des Volumenstroms des Prozessstroms einen hohen Abscheidegrad und einen geringen Druckverlust bei, wobei der Durchschlag, also die Menge an Feststoff und/oder Flüssigkeit, die den Hydrozyklon passiert, gegenüber einem Hydrozyklon ohne Leitmittel verringert wird. Beispielsweise kann bei einer durchschnittlichen Partikelgröße von in dem Prozessstrom enthaltenen Feststoffpartikeln von 1 Mikrometer ein Abscheidegrad größer 90% erreicht werden.

Bevorzugt ist das Leitmittel zumindest abschnittsweise zylinderförmig ausgebildet, es kann jedoch auch andere, insbesondere auch mehrere verschiedene Querschnittsgeometrien aufweisen. Insofern das Leitmittel zylinderförmig ausgebildet ist, weist es bevorzugt einen Durchmesser auf, der zu dem Durchmesser der Umfangswandung ein Verhältnis zwischen 0,2 und 0,8, bevorzugt zwischen 0,3 und 0, 7, besonders bevorzugt zwischen 0,4 und 0,6 und insbesondere von 0,5, aufweist.

In einer bevorzugten Ausführungsform schließt sich an den ersten Prozessraumabschnitt oben ein durch einen konisch zu dem Auslass hin zusammenlaufende Umfangswandungsabschnitt gebildeter zweiter Prozessraumabschnitt an. Die Trajektorie des Prozessstroms wird dann entsprechend im zweiten Prozessraumabschnitt konisch zusammengeführt, wobei der radial außen an der Helixtrajektorie mitgezogene Prozessflüssigkeitsschleier an dem konischen Umfangswandungsabschnitt gebremst wird und in der Folge zumindest teilweise aus der Strömung ausfällt und entlang der Umfangswandung zurück in den unteren Bereich des Prozessraum strömt. Die Prozessflüssigkeit wird also nach dem Binden bzw. Agglomerieren von Feststoffen und/oder Flüssigkeiten wieder aus dem Prozessstrom abgeschieden und verbleibt im Hydrozyklon. Bevorzugt weist der Durchmesser des dann durch den konischen Umfangswandungsabschnitt gebildeten Auslass zu dem Durchmesser des ersten Prozessraumabschnitts ein Verhältnis zwischen 0,4 und 0,8, besonders bevorzugt zwischen 0,5 und 0,7 und insbesondere von 0,6 auf.

Weiterhin bevorzugt erstreckt sich das Leitmittel über die gesamte axiale Länge des ersten Prozessraumabschnitts. Besonders bevorzugt erstreckt sich das Leitmittel weiterhin auch über die gesamte axiale Länge des zweiten Prozessraumabschnitts. Auf diese Weise wird eine Führung der helixförmigen Trajektorie über den gesamten Prozessraum erreicht, sodass der Hydrozyklon einen besonders geringen Druckverlust aufweist.

Es ist weiterhin bevorzugt, wenn das Leitmittel an einem oberen Ende einen konisch nach oben zusammenlaufenden Leitmittelabschnitt aufweist. Ein solcher Leitmittelabschnitt korrespondiert dann mit dem konisch zusammenlaufenden Umfangswandungsabschnitt, sodass der lichte Querschnitt des zweiten Prozessraumabschnitts gegenüber dem lichten Querschnitt des ersten Prozessraumabschnitts nicht oder nur wenig verändert wird. Besonders bevorzugt verläuft der konisch zusammenlaufende Leitmittelabschnitt und der konisch zusammenlaufende Umfangswandungsabschnitt parallel zueinander. Ebenso bevorzugt erstreckt sich der konisch zusammenlaufende Leitmittelabschnitt axial über die gesamte axiale Länge des zweiten Prozessraumabschn itts.

In einer besonders bevorzugten Ausführungsform weist der Hydrozyklon einen oberhalb des Auslasses angeordnetes Dachelement zum Umlenken des Prozessstroms nach unten auf, wobei das Dachelement topfförmig mit einem Boden und einer sich von dem Boden nach unten erstreckenden zylindrischen Seitenwandung ausgebildet ist. Der aus dem Auslass im Wesentlichen nach oben austretende Prozessstrom strömt dann gegen den Boden des Dachelements und wird dort zwangsläufig nach unten umgelenkt. Der Prozessstrom entweicht dann in einem Spalt zwischen der Seitenwandung und der Umfangswandung aus dem Dachelement, wobei eine Spaltflächennormale bevorzugt im Wesentlichen eine radiale Orientierung aufweist. Durch die Umlenkung an dem Dachelement weist die Strömung in dem Spalt eine nach unten gerichtete Strömungsrichtungskomponente auf. Bevorzugt wird der Prozessstrom unmittelbar nach dem Austreten aus dem Spalt dann nach oben abgeleitet. Auf diese Weise wird erreicht, dass noch in dem Prozessstrom enthaltene Feststoffpartikeln, Flüssigkeitströpfchen und/oder Prozessflüssigkeit sich durch Trägheit weiterhin nach unten fortbewegt, während der gasförmige Anteil des Prozessstroms gereinigt nach oben abgeleitet wird. Die Feststoffpartikeln, Flüssigkeitströpfchen und/oder Prozessflüssigkeit können bzw. kann also einer schlagartigen Umlenkung des Prozessstroms nicht folgen und fallen bzw. fällt aus. Durch die nach unten gerichtete Bewegungskomponente von noch in dem Prozessstrom enthaltener Prozessflüssigkeit wird an dem Spalt weiterhin erneut ein Prozessflüssigkeitsschleier erzeugt, der von dem restlichen Prozessstrom durchströmt wird, sodass noch ungebundene Feststoffpartikeln und/oder Flüssigkeitströpfchen erneut oder erstmals mit der Prozessflüssigkeit in Kontakt gebracht werden und dort gebunden werden. Ein Hydrozyklon mit einem Dachelement weist folglich gegenüber einem Hydrozyklon ohne Dachelement einen verbesserten Abscheidegrad auf. Ein Ableiten kann beispielsweise durch ein Absaugen erreicht oder verstärkt werden.

Bevorzugt sind das Dachelement und der erste Prozessraumabschnitt in der axialen Richtung durch den Spalt zueinander beabstandet angeordnet. Weiterhin bevorzugt sind das Dachelement und der zweite Prozessraumabschnitt in der axialen Richtung durch den Spalt zueinander beabstandet angeordnet. Bevorzugt ist jedoch vorgesehen, dass sich der Spalt und der zweite Prozessraumabschnitt zumindest teilweise in der axialen Richtung überschneiden. Es wird dann durch eine äußere Seite des konischen Umfangswandungsabschnitts eine Leitfläche für den Prozessstrom an dem Spalt ausgebildet, die in Ihrer Orientierung der gewünschten Strömungsrichtung des Prozessstroms am Austritt aus dem Spalt nach schräg unten entspricht. Die Strömung kann sich dann auch im Bereich des Spalts mit einem besonders geringen Druckverlust ausbilden. Die Höhe des Spalts weist bevorzugt zu der axialen Länge des ersten Prozessraumabschnitts ein Verhältnis zwischen 0,1 und 0,5, bevorzugt zwischen 0,2 und 0,4 und insbesondere von 0,3 auf.

Weiterhin bevorzugt ist auch der Boden des Dachelements nach oben konisch zusammenlaufend ausgebildet. Die Umlenkung des aus dem Auslass austretenden Prozessstroms erfolgt dann in eine schräg nach unten verlaufende Richtung, die der gewünschten Strömungsrichtung an dem Spalt entspricht. Es ist also keine weitere Umlenkung zwischen dem Dachelement und dem Spalt notwendig, sodass insgesamt ein geringer Druckverlust erreicht ist.

In einer Ausgestaltung weist zudem die Seitenwandung einen Kragen zum Führen des Prozessstroms bei einer Umlenkung nach oben beim Austreten aus dem Dachelement auf. Der schlagartig nach oben umgelenkte Teil des Prozessstroms kann dann an dem Kragen mit geringer Turbulenzbildung und insofern mit geringem Druckverlust entlangströmen.

Weiterhin bevorzugt ist das Dachelement mittels einem Befestigungsmittel an dem Leitmittel gehalten. Das Befestigungsmittel erstreckt sich dann bevorzugt koaxial mit dem Leitmittel und insofern mittig der helixförmigen Strömungstrajektorie. Das Befestigungsmittel ist insofern nicht in einem unmittelbaren Strömungsweg des Prozessstroms angeordnet und trägt insofern nicht zu einem weiteren Druckverlust des Prozessstroms bei. Zudem ist durch das Befestigungsmittel ein insgesamt kompakter Hydrozyklon geschaffen.

Insgesamt ist mit der vorgenannten Ausgestaltung ein einfach demontierbarer Hydrozyklon geschaffen, bei dem das Dachelement durch Lösen von dem Befestigungsmittel entfernt werden kann und durch den dann offenliegenden Auslass ein ausreichender Zugang zu den Prozessräumen geschaffen ist. Alternativ oder ergänzend kann auch der konisch zusammenlaufende Umfangswandungsabschnitt einfach demontierbar ausgebildet sein. Der Hydrozyklon ist insofern besonders einfach für eine Reinigung zugänglich. Insbesondere ist eine Entleerung der Prozessflüssigkeit aus dem ersten Prozessraumabschnitt für eine Reinigung nicht zwingend nötig, jedoch dennoch möglich.

In einer weiteren Ausführungsform ist das Leitmittel zumindest über einen Teil seiner axialen Erstreckung im Querschnitt veränderbar ausgebildet. Darunter ist zu verstehen, dass die Querschnittsfläche des Leitmittels beispielsweise bei gleichbleibender Geometrie in ihrer Größe verändert werden kann, dass die Geometrie selbst verändert werden kann, oder dass ein Querschnitt des Leitmittels beispielsweise quer zur axialen Richtung verschoben werden kann. Auf diese Weise kann das Leitmittel auf einen jeweiligen Prozessstrom derart angepasst werden, dass für diesen Prozessstrom die Betriebsparameter optimiert werden. Beispielsweise kann ein möglichst günstiges Verhältnis zwischen einem geringen Druckverlust und einem hohen Abscheidegrade eingestellt werden. Der Hydrozyklon ist auf diese Weise für eine Vielzahl von Prozessströmen einsetzbar.

Weiterhin ist es mit einem veränderbar ausgebildeten Leitmittel auch ermöglicht, dass der Querschnitt im Betrieb durch eine Steuerung oder eine Regelung einem sich in zumindest einer Eigenschaft ändernden Prozessstrom nachgeführt wird. Beispielsweise kann der Prozessstrom sich in seinem Volumenstrom, seinem Massenstrom oder in seiner Zusammensetzung, insbesondere hinsichtlich Feststoff- oder Flüssigkeitsbeladung, ändern. Die Eigenschaften des Prozessstroms werden dann beispielsweise sensorisch erfasst und ausgewertet, wobei ein idealer Leitmittelquerschnitt mittels Datenverarbeitungsmitten errechnet wird und mittels Steuermitteln an dem Leitmittel eingestellt wird.

Beispielsweise ist das Leitrohr elastisch ausgebildet, wobei ein Innenraum des Leitrohres zum Veränderung des Querschnitts des Leitrohres im Volumen veränderbar ausgebildet ist. Der Hydrozyklon kann alternativ auch Mittel zum Stauchen und/oder Strecken des Leitmittels zum Veränderung des Querschnitts des Leitmittels aufweisen.

In einer weiteren bevorzugten Ausführungsform weist zumindest ein Wandungsabschnitt der Umfangswandung einen zum Vermeiden von Anhaftungen an dem Wandungsabschnitt mittels elastischer Verformung des Wandungsabschnitts ausreichend kleinen Elastizitätsmodul auf. Unter einem Vermeiden von Anhaftungen wird sowohl verstanden, dass ein Anhaften von Feststoffen und/oder Flüssigkeiten verhindert wird, als auch, dass bereits bestehende Anhaftungen abgelöst werden. Eine Anhaftung entsteht dabei beispielsweise dadurch, dass Feststoffe und/oder Flüssigkeiten, insbesondere durch die Prozessflüssigkeit erzeugte Feststoffagglomerate mechanisch festgehalten werden oder dadurch, dass zwischen Feststoffen und/oder Flüssigkeiten und Umfangswandung eine anderweitige Bindungskraft besteht, beispielsweise eine elektrostatische, magnetische oder chemische Bindungskraft.

In dem Wandungsabschnitt weist also die Umfangswandung eine Kombination aus Material und Geometrie auf, die es erlaubt, dass der Wandungsabschnitt elastisch verformt werden kann, ohne dabei eine Beschädigung zu erfahren, insbesondere ohne dabei eine plastische Verformung zu erfahren. Eine solche Verformung ist dabei in einem Maß möglich, das es erlaubt, Anhaftungen an einer Innenseite des Wandungsabschnitts abzulösen. Es wird also in Folge der Verformung eine Relativbewegung zwischen dem Wandungsabschnitt und der Anhaftung erzeugt, mittels der eine Bindekraft zwischen Anhaftung und dem Wandungsabschnitt aufgelöst oder überlagert wird. Insbesondere werden Anhaftungen im Zuge der Verformung von dem Wandungsabschnitt weg beschleunigt. Die Relativbewegung kann auch derart ausgestaltet sein, dass einer Anhaftung das Anhaften an dem Wandungsabschnitt erschwert oder unmöglich gemacht wird, beispielsweise indem der Wandungsabschnitt periodisch mit einer ausreichend hohen Frequenz verformt wird. Durch die vorgenannte Ausbildung des Hydrozyklons ist es vorteilhaft möglich, Anhaftungen zu vermeiden, insbesondere nicht entstehen zu lassen und/oder bei Bestehen von dem Wandungsabschnitt abzulösen, ohne dass dazu eine Unterbrechung des Betriebs des Hydrozyklons nötig wäre. Beispielsweise kann der Wandungsabschnitt dazu von außen verformt werden, beispielsweise in bestimmten regelmäßigen Abständen. Im einfachsten Fall kann der Hydrozyklon händisch von außen verformt werden, bevorzugt können dazu aber entsprechende Mittel, insbesondere automatisierte Mittel vorgesehen sein. Ein Verformen des Wandungsabschnitts ermöglicht das Vermeiden von Anhaftungen vorteilhaft auf sehr einfache Art und Weise. Ferner ergibt sich mit einem elastisch ausgebildeten Wandungsabschnitt eine verringerte Geräuschemission beim Betrieb des Hydrozyklons.

In noch einer weiteren Ausführungsform ist eine einem oder beiden der Prozessräume zugewandte Innenseite der Umfangswandung wenigstens teilweise elektrisch leitend und geerdet ausgebildet. Hierdurch wird verhindert, dass elektrisch geladene Feststoffpartikeln an dem Wandungsabschnitt durch deren Ladung und/oder Potentialunterschiede anhaften. Bei einem aus Kunststoff ausgebildeten Wandungsabschnitt sind diese Eigenschaften beispielsweise durch eine Beschichtung zu erzielen.

Nach einem zweiten Aspekt der Erfindung wird die Aufgabe gelöst durch eine Hydrozyklonanordnung mit einem Hydrozyklon nach dem ersten Erfindungsaspekt und mit einer Prozessflüssigkeitswanne, wobei der Hydrozyklon an einem unteren Ende des Prozessraums offen ausgebildet ist und in der Prozessflüssigkeitswanne stehend angeordnet ist. Mit der Hydrozyklonanordnung sind dabei im Wesentlichen die bezüglich des ersten Erfindungsaspekts vorbeschriebenen Vorteile entsprechend zu erreichen. Insbesondere weist die Hydrozyklonanordnung einen hohen Abscheidegrad und einen geringen Druckverlust auf.

Die Wanne erstreckt sich dabei bevorzugt radial über die Umfangswandung hinaus nach außen und bildet insofern einen Überstand zu dem Hydrozyklon. Auf diese Weise gelangt auch aus dem Spalt austretende Prozessflüssigkeit in die Wanne zurück, etwa im freien Fall oder an der Außenseite der Umfangswandung entlang. Insbesondere erstreckt sich an radial außenliegenden Enden eine umfänglich ausgebildete Wannenwandung nach oben und bildet so ein Gehäuse um den Hydrozyklon. Die Prozessflüssigkeit wird dann besonders vorteilhaft innerhalb des so gebildeten Gehäuses gehalten und sicher in die Wanne zurückgeführt.

In einer bevorzugten Ausführungsform des zweiten Erfindungsaspekts ist oberhalb des Dachelements eine Abführung, insbesondere eine Absaugung, zum Abführen des Prozessstroms angeordnet. Insbesondere kann ein durch die Wannenwandung gebildetes Gehäuse sich auch oberhalb des Hydrozyklons mit einem Gehäusedeckel horizontal erstrecken, wobei der Gehäusedeckel durch einen Ableitstutzen, insbesondere einen Absaugstutzen durchbrochen ist. Der aus dem Spalt austretende Prozessstrom wird dann unmittelbar außerhalb des Spalts, also außerhalb des Hydrozyklons, schlagartig nach oben abgelenkt und die Feststoffe und/oder Flüssigkeiten darin werden wie vorbeschrieben abgetrennt. Die Hydrozyklonanordnung weist dann einen besonders hohen Abscheidegrad auf, wobei auch Prozessflüssigkeit sicher wieder aus dem Prozessstrom abgetrennt wird. Der Hydrozyklonanordnung nachgelagerte Komponenten einer Anlage wie etwa weitere Filterstufen werden dann nicht von Feststoffen und/oder Flüssigkeiten, insbesondere der Prozessflüssigkeit, erreicht. Insofern das Gehäuse einen Gehäusedeckel aufweist, ist der Hydrozyklon gänzlich umschlossen und es ist vollständig vermieden, dass insbesondere Flüssigkeiten in die Umgebung der Hydrozyklonanordnung gelangen.

In einer Ausführungsform der Hydrozyklonanordnung weist dieser mehrere Hydrozyklone auf, wobei die mehreren Hydrozyklone in der gleichen Prozessflüssigkeitswanne bzw. dem gleichen Gehäuse angeordnet sind. Auf diese Weise kann gegenüber einer Hydrozyklonanordnung mit nur einem Hydrozyklon der Volumenstrom vermehrfacht werden, insbesondere ohne den Differenzdruck zu erhöhen. Die Hydrozyklonanordnung ist insofern durch Parallelschalten einer beliebiger Anzahl an Hydrozyklonen auf einfache Weise skalierbar. Es können mit gleicher Wirkung auch mehrere Hydrozyklonanordnungen mit eigenen Prozessflüssigkeitswannen bzw. Gehäusen parallel zueinander betrieben werden.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine schematische Querschnittsansicht eines Hydrozyklons nach dem ersten Aspekt der Erfindung gemäß einem bevorzugten Ausführungsbeispiel;
- Fig. 2: eine schematische Querschnittsansicht einer Hydrozyklonanordnung nach dem zweiten Aspekt der Erfindung mit einem Hydrozyklon gemäß Fig. 1;
- Fig. 3: eine perspektivische Ansicht des Hydrozyklons nach dem ersten Aspekt der Erfindung gemäß Fig. 1.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

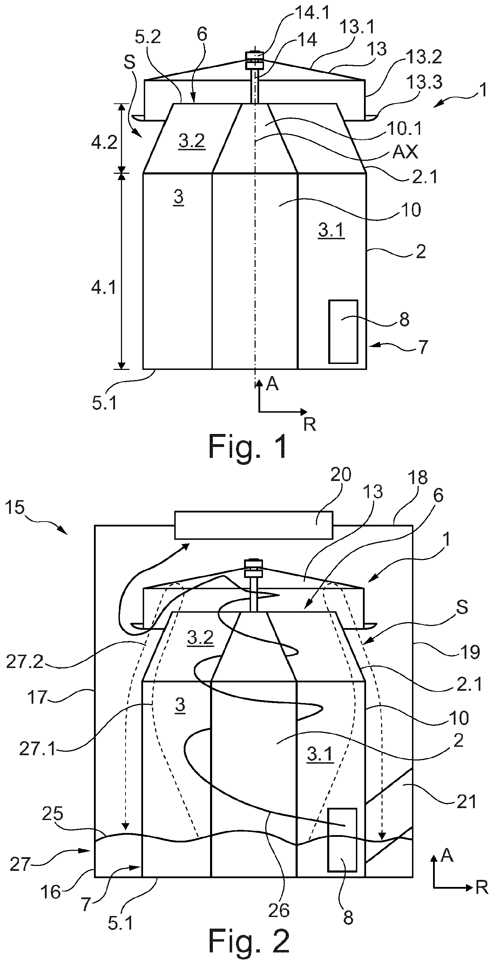

Figur 1 zeigt einen Hydrozyklon 1 nach dem ersten Erfindungsaspekt mit einer Umfangswandung 2, wobei durch die Umfangswandung 2 ein Prozessraum 3 umschlossen ist. Der Prozessraum 3 spannt um seine Mittelachse AX ein zylindrisches Koordinatensystem mit einer axialen Richtung A, einer radialen Richtung R und einer nicht näher dargestellten Umfangsrichtung auf, wobei die axiale Richtung A vertikal ausgerichtet ist. Der Prozessraum 3 weist weiterhin einen zylindrisch ausgebildeten ersten Prozessraumabschnitt 3.1 sowie einen sich daran oben anschließenden, konisch ausgebildeten zweiten Prozessraumabschnitt 3.2 auf, wobei sich der erste Prozessraumabschnitt 3.1 über eine erste axiale Länge 4.1 erstreckt und der zweite Prozessraumabschnitt 3.2 sich über eine zweite axiale Länge 4.2 erstreckt. Der zweite Prozessraumabschnitt 3.2 ist also durch einen konisch zusammenlaufenden Umfangswandungsabschnitt 2.1 gebildet. Der Prozessraum 3 weist weiterhin ein unteres Ende 5.1 sowie ein oberes Ende 5.2 auf, wobei an dem oberen Ende 5.2 ein Auslass 6 angeordnet ist. In einem unteren Bereich 7 des Prozessraums 3 ist die Umfangswandung 2 durch einen Einlassstutzen 8 durchbrochen.

Koaxial zu der Mittelachse AX ist in dem Prozessraum 3 ein Leitmittel 10 angeordnet, dass in dem ersten Prozessraumabschnitt 3.1 zylindrisch ausgebildet ist und in dem zweiten Prozessraumabschnitt 3.2 einen konisch zusammenlaufenden Leitmittelabschnitt 10.1 aufweist. Das Leitmittel 10 ist also in dem gesamten Prozessraum 3 parallel zu der Umfangswandung 2 ausgebildet und dient dazu, eine helixförmige Strömung eines durch den Einlassstutzen 8 in den Prozessraum 3 eintretenden Prozessstroms zu führen, wie im Folgenden bezüglich Figur 2 näher beschrieben.

Oberhalb des Auslasses 6 ist ein Dachelement 13 angeordnet, das mittels einem Befestigungsmittel 14 an dem Leitmittel 10 gehalten ist. Genauer ist das Dachelement 13 an dem Befestigungsmittel 14 mittels Schraubmuttern 14.1 gehalten. Das Dachelement 13 weist einen Boden 13.1 sowie eine sich nach unten erstreckende zylindrische Seitenwandung 13.2 auf und ist insofern insgesamt topfförmig gestaltet. Der Boden 13.1 ist nach oben hin konisch zusammenlaufend ausgebildet. Weiterhin weist das Dachelement 13 einen Kragen 13.3 an der Seitenwandung 13.2 auf. Das Dachelement 13 bildet mit der Umfangswandung 2 einen Spalt S, der ich in dem axialen Bereich des zweiten Prozessraumabschnitts 3.2 erstreckt. Der zweite Prozessraumabschnitt 3.2 ragt also in das Dachelement 13 hinein. Eine Flächennormale des Spalts S ist radial nach außen weisend orientiert.

Figur 2 zeigt eine Hydrozyklonanordnung 15 nach dem zweiten Erfindungsaspekt und zudem die in dem Hydrozyklon 1 bzw. der Hydrozyklonanordnung 15 vorherrschenden Strömungsverhältnisse, anhand derer die Funktion des Hydrozyklons 1 bzw. der Hydrozyklonanordnung 15 näher erläutert wird.

Die Hydrozyklonanordnung 15 umfasst einen bereits vorbeschriebenen Hydrozyklon 1, auf dessen erneute Beschreibung verzichtet wird. Die Hydrozyklonanordnung 15 umfasst weiterhin eine Prozessflüssigkeitswanne 16, von der sich eine Wannenwandung 17 nach oben erstreckt. Die Prozessflüssigkeitswanne 16, die Wannenwandung 17 sowie ein an dem oberen Ende der Wannenwandung 17 vorgesehener Gehäusedeckel 18 bilden zusammen ein Gehäuse 19. In dem Gehäusedeckel 18 ist eine Abführung 20 eingelassen, die insbesondere als Absaugung ausgebildet sein kann. Weiterhin ist in dem Gehäuse 19, bzw. das Gehäuse 19 durchbrechend, eine Prozessstromzuführung 21 vorgesehen, die dem Einlassstutzen 7 einen Prozessstrom von oben her zuführt.

Der Prozessraum 3 ist an seinem unteren Ende 5.1 offen ausgebildet und steht in der Prozessflüssigkeitswanne 16. Die Prozessflüssigkeitswanne 16 und somit auch der Prozessraum 3 sind bis zu einem Füllstand 25 mit einer Prozessflüssigkeit 27, insbesondere Wasser, gefüllt. Der Füllstand 25 erstreckt sich bis zu einer bestimmten Höhe des Einlassstutzens 8, so dass die Prozessflüssigkeit 27 teilweise den Einlassstutzen 8 bedeckt. Ein durch den Einlassstutzen 8 in den Prozessraum 3 in Umfangsrichtung eintretender Prozessstrom 26, der zu diesem Zeitpunkt gasförmig ist und mit unerwünschten Feststoffen und/oder Flüssigkeiten beladen ist, strömt in dem Prozessraum 3 entlang einer helixförmigen Trajektorie und wird dabei durch das Leitmittel 10 geführt. Dabei wirbelt der Prozessstrom 26 aus der Prozessflüssigkeit 27 einen im ersten Prozessraumabschnitt 3.1 parabelförmig ausgebildeten Prozessflüssigkeitsschleier 27.1 auf. Der Prozessflüssigkeitsschleier 27.1 befindet sich dann in dem Prozessraum 3 radial außen und dient dazu, dass in dem Prozessstrom 26 enthaltene Feststoffe und/oder Flüssigkeiten, die in dem Prozessraum 3 durch die Fliehkraft radial nach außen getragen werden, mit der Prozessflüssigkeit 27 in Kontakt treten, um gebunden und/oder agglomeriert zu werden.

In dem zweiten Prozessraumabschnitt 3.2 wird sowohl die helixförmige Trajektorie des Prozessstroms 26 als auch der Prozessflüssigkeitsschleier 27.1 in der konisch zusammenlaufenden Umfangswandung 2 verengt. Dabei wird bereits ein Teil der Prozessflüssigkeit 27 von dem Prozessstrom 26 getrennt und läuft entlang der Innenseite der Umfangswandung 2 zurück in die Prozessflüssigkeitswanne 16.

Der Prozessstrom 26 und die restliche Prozessflüssigkeit 27 treten an dem Auslass 6 hauptsächlich nach oben orientiert aus und treffen auf den Boden 13.1 des Dachelements 13. Dort werden sie jeweils nach unten umgelenkt und strömen dann zu dem Spalt S. An dem Spalt S wird der Prozessstrom 26 schlagartig nach oben zu der Abführung 20 umgelenkt und dabei durch den Kragen 13.3 zum Vermeiden von Turbulenzen geführt. Die Prozessflüssigkeit 27 kann dieser Umlenkung nicht folgen und verlässt den Spalt S daher nach unten ausgerichtet. Die Prozessflüssigkeit 27 bildet dabei in dem Spalt S einen weiteren Prozessflüssigkeitsschleier 27.2, der von dem Prozessstrom 26 quer durchströmt wird, sodass in dem Prozessstrom 26 noch enthaltene Feststoffe und/oder Flüssigkeiten an dem Prozessflüssigkeitsschleier 27.2 gebunden werden.

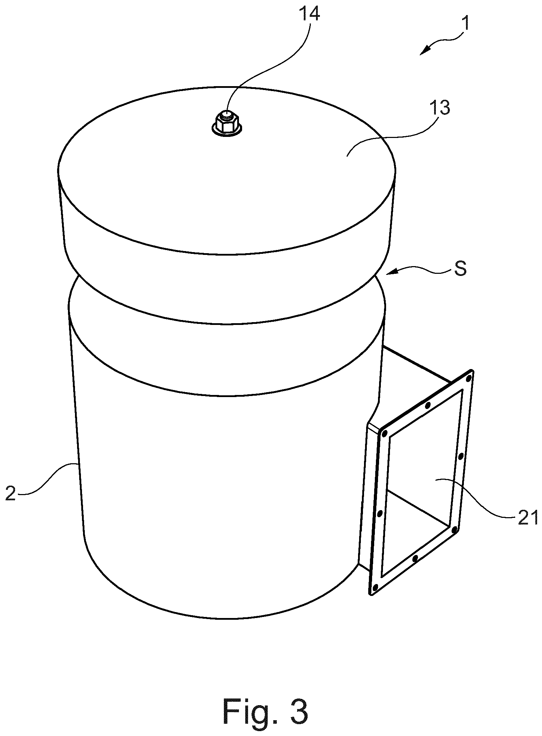

Figur 3 zeigt dem Hydrozyklon 1 nochmals in perspektivischer Ansicht von außen, wobei die gezeigten Elemente des Hydrozyklons 1 sich bereits aus dem vorbeschriebenen ergeben und daher nicht erneut beschrieben werden.

### Bezugszeichenliste

- 1: Hydrozyklon
- 2: Umfangswandung
- 2.1: konisch zusammenlaufender Prozessraumabschnitt
- 3: Prozessraum
- 3.1: erster Prozessraumabschnitt
- 3.2: zweiter Prozessraumabschnitt
- 4.1: erste axiale Länge
- 4.2: zweite axiale Länge
- 5.1: unteres Ende des Prozessraums
- 5.2: oberes Ende des Prozessraums
- 6: Auslass
- 7: unterer Bereich des Prozessraums
- 8: Einlassstutzen
- 10: Leitmittel
- 10.1: konisch zusammenlaufender Leitmittelabschnitt
- 13: Dachelement
- 13.1: Boden des Dachelements
- 13.2: zylindrische Seitenwandung des Dachelements
- 13.3: Kragen des Dachelements
- 14: Befestigungsmittel
- 14.1: Schraubmutter
- 15: Hydrozyklonanordnung
- 16: Prozessflüssigkeitswanne
- 17: Wannenwandung
- 18: Gehäusedeckel
- 19: Gehäuse
- 20: Abführung
- 21: Prozessstromzuführung
- 25: Füllstand der Prozessflüssigkeit
- 26: Prozessstrom
- 27: Prozessflüssigkeit
- 27.1: Prozessflüssigkeitsschleier
- 27.2: Prozessflüssigkeitsschleier

- A: axiale Richtung
- AX: Mittelachse
- R: radiale Richtung
- S: Spalt

## Patentansprüche

1. Hydrozyklon (1) zum Abscheiden von Feststoffen und/oder Flüssigkeiten aus einem gasförmigen Prozessstrom (26), aufweisend
einen durch eine Umfangswandung (2) gebildeten, in einem ersten Prozessraumabschnitt (3.1) zylindrisch ausgebildeten Prozessraum (3), wobei eine axiale Richtung (A) des Prozessraums (3) sich vertikal erstreckt und ein unterer Bereich (7) des Prozessraums (3) zum Befüllen mit einer Prozessflüssigkeit (27) bis zu einem Füllstand (25) vorgesehen ist;
einen die Umfangswandung (2) in dem unteren Bereich (7) des Prozessraums (3) durchbrechenden Einlassstutzen (8) zum Einlassen des Prozessstroms (26) in Umfangsrichtung des Prozessraums (3);
einen an einem oberen Ende (5.2) des Prozessraums (3) angeordneten Auslass (6) zu Herausführen des Prozessstroms (26); und
ein sich koaxial zu der Umfangswandung (2) in dem Prozessraum (3) erstreckendes Leitmittel (10) zum Führen des Prozessstroms (26) in einer Helixform zwischen dem Einlassstutzen (8) und dem Auslass (6).

2. Hydrozyklon (1) nach Anspruch 1, wobei ein sich an den ersten Prozessraumabschnitt (3.1) oben ein durch einen konisch zu dem Auslass hin zusammenlaufende Umfangswandungsabschnitt (2.1) gebildeter zweiter Prozessraumabschnitt (3.2) anschließt.

3. Hydrozyklon (1) nach Anspruch 1 oder 2, wobei das Leitmittel (10) sich über die gesamte axiale Länge (4.1) des ersten Prozessraumabschnitts (3.1), insbesondere über die gesamte axiale Länge (4.1, 4.2) des Prozessraums (3), erstreckt.

4. Hydrozyklon (1) nach einem der vorhergehenden Ansprüche, wobei das Leitmittel (10) an einem oberen Ende einen konisch nach oben zusammenlaufenden Leitmittelabschnitt (10.1) aufweist.

5. Hydrozyklon (1) nach Anspruch 4, wobei der konisch zusammenlaufende Leitmittelabschnitt (10.1) sich axial über die gesamte axiale Länge (4.2) des zweiten Prozessraumabschnitts (3.2) erstreckt.

6. Hydrozyklon (1) nach einem der vorhergehenden Ansprüche, aufweisend einen oberhalb des Auslasses (6) angeordnetes Dachelement (13) zum Umlenken des Prozessstroms (26) nach unten, wobei das Dachelement (13) topfförmig mit einem Boden (13.1) und einer sich von dem Boden (13.1) nach unten erstreckenden zylindrischen Seitenwandung (13.2) ausgebildet ist.

7. Hydrozyklon (1) nach Anspruch 6, wobei das Dachelement (13) und der erste Prozessraumabschnitt (3.1) in der axialen Richtung (A) durch einen Spalt (S) zueinander beabstandet angeordnet sind.

8. Hydrozyklon (1) nach Anspruch 7, wobei sich der Spalt (S) und der zweite Prozessraumabschnitt (3.2) zumindest teilweise in der axialen Richtung (A) überschneiden.

9. Hydrozyklon (1) nach einem der Ansprüche 6 bis 8, wobei der Boden (13.1) des Dachelements (13) nach oben konisch zusammenlaufend ausgebildet ist.

10. Hydrozyklon (1) nach einem der Ansprüche 6 bis 9, wobei die Seitenwandung (13.2) einen Kragen (13.3) zum Führen des Prozessstroms (26) bei einer Umlenkung nach oben beim Austreten aus dem Dachelement (13) aufweist.

11. Hydrozyklon (1) nach einem der Ansprüche 6 bis 10, wobei das Dachelement (13) mittels einem Befestigungsmittel (14) an dem Leitmittel (10) gehalten ist.

12. Hydrozyklon (1) nach ein einem der vorhergehenden Ansprüche, wobei das Leitmittel (10) zumindest über einen Teil seiner axialen Erstreckung im Querschnitt veränderbar ausgebildet ist.

13. Hydrozyklon (1) nach einem der vorhergehenden Ansprüche, wobei zumindest ein Wandungsabschnitt der Umfangswandung (2) einen zum Vermeiden von Anhaftungen an dem Wandungsabschnitt mittels elastischer Verformung des Wandungsabschnitts ausreichend kleinen Elastizitätsmodul aufweist.

14. Hydrozyklonanordnung (15) mit einem Hydrozyklon (1) nach einem der vorhergehenden Ansprüche und mit einer Prozessflüssigkeitswanne (16), wobei der Hydrozyklon (1) an einem unteren Ende (5.1) des Prozessraums (3) offen ausgebildet ist und in der Prozessflüssigkeitswanne (16) stehend angeordnet ist.

15. Hydrozyklonanordnung (15) nach Anspruch 14, wobei oberhalb des Dachelements (13) eine Abführung (20), insbesondere eine Absaugung, zum Abführen des Prozessstroms (26) angeordnet ist.
